# EUROPÄISCHE PATENTSCHRIFT

(11) **EP 0 594 819 B1**
(45) Veröffentlichungstag und Bekanntmachung des Hinweises auf die Patenterteilung: **31.07.1996**
(21) Anmeldenummer: 93909904.0
(22) Anmeldetag: 06.05.1993
(51) Int. Cl.: E04G 21/08, H02K 1/18

(54) **RÜTTLER MIT EINGEBAUTEM ELEKTROMOTOR**
VIBRATOR WITH BUILT-IN ELECTROMOTOR
VIBREUR AVEC MOTEUR ELECTRIQUE INCORPORE

(30) Priorität: 11.05.1992 DE 4215463
(43) Veröffentlichungstag der Anmeldung: 04.05.1994
(73) Patentinhaber: WACKER-WERKE GMBH & CO. KG, D-80809 München (DE)
(72) Erfinder: POLACEK, Manfred, D-8034 Germering (DE)
(74) Vertreter: Hieke, Kurt
(86) Internationale Anmeldenummer: EP9301107
(87) Internationale Veröffentlichungsnummer: WO9323641

(56) Entgegenhaltungen:
- DE-A- 1 029 081
- DE-A- 2 817 170
- DE-A- 3 614 748
- DE-A- 3 633 857
- FR-A- 851 908
- US-A- 4 667 916

## Beschreibung

Die Erfindung bezieht sich auf einen Rüttler gemäß dem einleitenden Teil des Patentanspruchs 1.

Rüttler dieser Art sind aus DE-A-2 817 170 bekannt. Die Sicherung des Statorpakets gegen Drehen ist bei Rüttlern dieser Art nötig, weil das im Betrieb auf das Statorpaket einwirkende Gegendrehmoment sonst zu einer Verlagerung des Statorpakets in Umfangsrichtung des Gehäusemantels führen würde.

Bei den bekannten Rüttlern gemäß DE-A-2 817 107 sucht man die Sicherung des Statorpakets gegen Drehen dadurch zu erreichen, daß das Paket unter Zwischenlage von elastischen Mitteln in Achsrichtung mit einer gewissen Elastizität gegen eine gehäusefeste Schulter verspannt wird. Diese Art der Verspannung bietet keine volle Gewãhr, daß sich das Statorpaket unter höherer Belastung nicht doch gegenüber dem Gehäuse dreht.

Eine andere bekannte Art von Rüttlern (Baureihe IRE 40, IRE 57, IRE 65 der Anmelderin) vermeidet diese Gefahr dadurch, daß das Statorpaket mit Preßpassung in den Gehäusemantel eingebaut wird. Dies erfordert eine genaue Bearbeitung der Gehäusemantelinnenfläche und der Außenfläche des Statorpakets, die Verwendung einer Presse bei der Montage und den Einsatz einer besonderen Ausziehvorrichtung bei einer eventuell nötigen Demontage.

Der Erfindung liegt die Aufgabe zugrunde, einen Rüttler gemäß dem einleitenden Teil des Patentanspruchs 1 zu schaffen, bei dem das Statorpaket trotz seiner leichten Einschiebbarkeit in den Gehäusemantel und der dadurch ermöglichten besonders einfachen Fertigung, Montage und Demontage des Rüttlers zuverlässig gegen Drehen bezüglich des Gehäuses gesichert ist.

Die vorgenannte Aufgabe wird durch die im Patentanspruch 1 genannten Merkmale gelöst.

Bei dem erfindungsgemäßen Rüttler ist das Statorpaket trotz der Gleitpassung durch das einfach zu montierende Spreizelement zuverlässig gegen Drehen unter dem Gegendrehmoment gesichert, weil sich die Spreizkrallen des formschlüssig mit dem Statorpaket verbundenen Spreizelements mit ihren Kanten in die Innenwandung des Gehäusemantels einbeißen.

Die Unteransprüche betreffen vorteilhafte Ausführungsformen des Rüttlers gemäß Patentanspruch 1.

Die Erfindung wird nachstehend anhand der Zeichnung an einem Ausführungsbeispiel noch näher erläuterte

In der Zeichnung zeigt:
- Fig.1: den im Zusammenhang mit der Erfindung wesentlichen Teil eines erfindungsgemäß gestalteten Innenrüttlers im axialen Längsschnitt,
- Fig.2: einen Stanzkörper zur Bildung des Spreizelements beim Rüttler gemäß Fig. 1 in Draufsicht, und
- Fig.3: das aus dem Stanzkörper gemäß Fig. 2 geformte Spreizelement im zentralen Längsschnitt von der Seite gesehen.

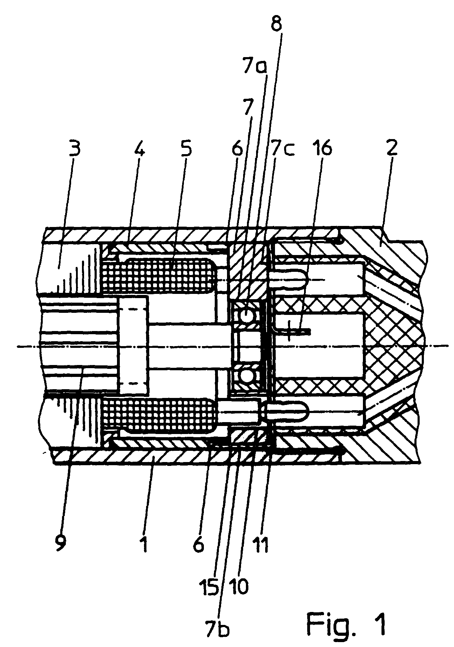

Die Fig.1 zeigt das im Betrieb in der Regel oben befindliche Ende eines Innenrüttlers im Längsschnitt. Die Darstellung der übrigen Teile des Innenrüttlers erübrigt sich, da dieser ansonsten in bekannter Weise aufgebaut ist.

Wie bei Innenrüttlern üblich, weist der Rüttler ein langgestrecktes Gehäuse mit einem zylindrischen Gehäusemantel 1 auf, der als solcher an einem Ende offen und dort mittels eines axial in ihn einfügbaren Gehäuseoberteils 2 verschließbar ist. Bei der in Fig. 1 dargestellten Ausführungsform ist das Gehäuseoberteil 2 in üblicher Weise in den Gehäusemantel 1 einschraubbar.

Von der offenen, in Fig. 1 rechten Stirnseite des Gehäusemantels 1 her ist in diesen mit Gleitpassung bezüglich der Gehäusemantelinnenwand das Statorpaket 3 eines Elektromotors bis zur Anlage an einer in Fig. 1 nicht zu sehenden, weiter links befindlichen Schulter im Gehäusemantel 1 eingeschoben. Das Einschieben kann infolge der Gleitpassung manuell bewerkstelligt werden.

An das eigentliche Statorpaket 3 schließt sich in Fig.1 nach rechts ein ebenfalls mit Gleitpassung bezüglich des Gehäusemantels 1 einschiebbares, hülsenartiges Abstandsstück 4 an, das an dem in Fig. 1 linken Ende fest mit dem Statorpaket 3 verbunden -hier, wie dargestellt, verschweißt- und etwas länger als der Wickelkopf 5 der Statorwicklung ist. Das Abstandsstück 4 bildet somit mit dem Statorpaket 3 eine im ganzen mit Gleitpassung in den Gehäusemantel 1 einschiebbare Einheit.

Das Abstandsstück 4 ist mit mindestens einer axialen Längsnut 6 versehen, die zur Außenfläche und zur in Fig.1 rechts befindlichen freien Stirnfläche des Abstandsstücks hin offen ist, so daß sie im eingebauten Zustand des Abstandsstücks 4 von dessen freier Stirnseite her zugänglich ist.

An das Abstandsstück 4 schließt sich in Fig.1 nach rechts ein parallele Stirnseiten aufweisender, massiver Ring 7 an, der ebenfalls mit Gleitpassung in den Gehäusemantel 1 einschiebbar ist. In die zentrale Bohrung 7a des Ringes 7 ist ein Wälzlager 8 für den Motorläufer 9 eingesetzt. Der Ring 7 ist mit einer von seiner einen Stirnseite zur anderen durchgehenden, mit einer Nut 6 im Abstandsstück 4 fluchtenden Nut 7b versehen und weist Bohrungen 10 zum Hindurchführen der elektrische Leitungen der Ständerwicklung auf, von denen in Fig.1 nur eine zu sehen ist.

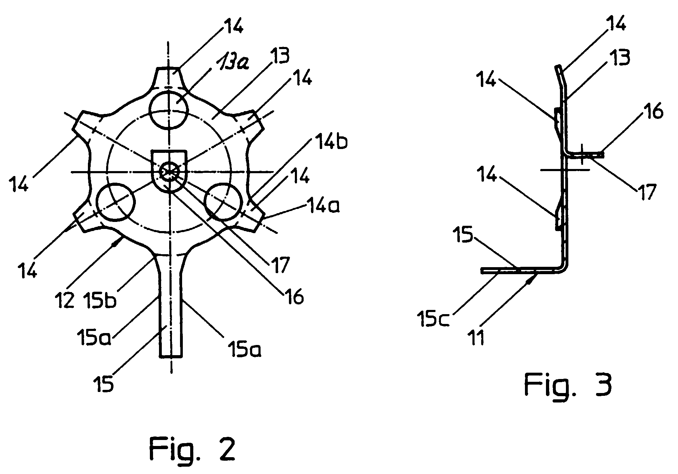

Zwischen die rechte Stirnfläche 7c des auch der Lagerung des Motorläufers 9 dienenden Ringes 7 und das Gehäuseoberteil 2 ist ein in Fig. 3 gesondert dargestelltes Spreizelement 11 eingefügt, das, wie nachstehend dargelegt, das Statorpaket 3 mit dem Abstandsstük 4 und auch den Ring 7 gegen Drehen bezüglich des Gehäusemantels 1 in dessen Umfangsrichtung sichert.

Das Spreizelement 11 ist aus einem in Fig. 2 dargestellten, ebenen und relativ dünnen Stanzkörper 12 gefertigt, der aus Federstahl besteht. Der Stanzkörper 12 weist ein im allgemeinen kreisförmiges Mittelstück 13 auf, von dem seitwärts fünf zungenartige, relativ kurze Vorsprünge 14 vorragen. Vier der Vorsprünge 14 sind einander paarweise diametral gegenüberstehend angeordnet. Die Außenkanten 14a aller Vorsprünge 14 liegen auf einem zum Mittelpunkt des Mittelstücks 13 konzentrischen Kreis. Von dem Mittelstück 13 erstreckt sich des weiteren radial auswärts ein gegenüber den zungenartigen Vorsprüngen 14 wesentlich längerer radialer Vorsprung 15 mit parallelen Seitenkanten 15a, der dem fünften kurzen Vorsprung 14 diametral gegenüberliegt.

Der Stanzkörper 12 weist im Mittelstück 13 Löcher 13a auf, die mit den Durchgangsöffnungen 10 im Ring 7 korrespondieren.

Wie aus Fig. 3 ersichtlich, wird das Spreizelement 11 aus dem Stanzkörper 12 dadurch erhalten, daß die Vorsprünge 14 und 15 zur gleichen Seite hin aus der Ebene des Mittelstücks 13 um eine Knicklinie 14b bei den kurzen Vorsprüngen und 15b bei dem langen Vorsprung abgebogen werden. Der Biegewinkel beträgt beim langen Vorsprung 15 neunzig Grad, bei den kurzen Vorsprüngen 14 ist er wesentlich kleiner und so gewählt, daß der weiter unten beschriebene Spreizeffekt mit großer Druckeinwirkung auf den Gehäusemantel 1 erzielbar ist.

Im abgebogenen Zustand der zungenartigen Vorsprünge 14 liegen die freien stirnseitigen Kanten 14a von diesen auf einem Kreis, dessen Durchmesser dem Innendurchmesser des Gehäusemantels 1 entspricht. Die Knicklinie 15b für den langen Vorsprung 15 ist so gewählt, daß die Außenfläche 15c des abgebogenen Vorsprungs 15 von der Mittelachse des Mittelstücks 13 den gleichen Abstand hat wie die stirnseitigen Kanten 14a der abgebogenen kurzen Vorsprünge 14. Mit diesen Abmessungen ist das Spreizelement 11 in der aus Fig. 1 ersichtlichen Weise so in den Gehäusemantel 1 einsetzbar, daß die Vorsprünge 14 mit ihren Stirnkanten 14a bis an den Gehäusemantel 1 heranreichen und der lange Vorsprung 15 unter Anlage seiner Außenfläche 15c am Gehäusemantel 1 durch die Nut 7b im Ring 7 hindurch ein Stück in eine Nut 6 im Abstandsstück 4 (in Fig. 1 in die untere) hineinragt. Die kurzen Vorsprünge 14 liegen dabei gleitbar an der ebenen, sich radial zum Gehäusemantel 1 erstreckenden Außenfläche des Ringes 7 an.

Das zunächst frei eingesetzte Spreizelement 11 wird beim Einschrauben des Gehäuseoberteils 2 in den Gehäusemantel 1 axial verspannt. Dabei werden die zungenartigen Vorsprünge 14 aufgespreizt, so daß sie mit großem Druck an die Innenwandung des Gehaüsemantels 1 angepreßt werden und sich mit ihren Kanten 14a in diese einbeißen. Sie bilden dann Spreizkrallen, die ein Drehen des Spreizelements 11 bezüglich des Gehäüsemantels 1 in dessen Umfangsrichtung zuverlässig verhindern. Damit sind auch der Ring 7 und insbesondere das mit dem Abstandsstück 4 fest verbundene Statorpaket 3 über den langen Vorsprung 15 gegen Drehen gesichert.

Im zentralen Bereich des Mittelstücks ist ein Lappen 16 mit einer Bohrung 17 zur vom Ring 7 abgewendeten Seite des Spreizelements 11 senkrecht herausgebogen, der es ermöglicht, das Spreizelement 11 nach Abschrauben des Gehäuseoberteils 2 problemlos zu fassen und herauszuziehen.

## Patentansprüche

1. Rüttler, insbesondere Innenrüttler, zum Verdichten von Beton oder dgl., dessen Unwuchtwelle von einem in das Gehäuse eingebauten Elektromotor mit Innenläufer (9) angetrieben ist, der von der einen Stirnseite des Gehäusemantels (1) her in den von diesem umschlossenen zylindrischen Innenraum des Gehäuses einschiebbar ist und dessen zylindrisches Statorpaket (3) mit Gleitpassung in den Gehäusemantel (1) einschiebbar und gegen Drehen bezüglich des Gehäusemantels (1) gesichert ist, wobei der Gehäusemantel (1) auf dieser einen Stirnseite mittels eines Gehäuseoberteils (2) verschließbar ist, das axial in den Gehäusemantel (1) einführbar und in der Verschlußstellung gegen Verschieben in Achsrichtung des Gehäusemantels (1) gesichert ist, **dadurch gekennzeichnet**, daß zur Sicherung des Statorpakets (3) gegen Drehen ein durch die offene Stirnseite über das eingeschobene Statorpaket (3) einsetzbares Spreizelement (11) aus Federstahl vorgesehen ist, das zwischen dem Gehäuseoberteil (2) und einer axial fixierten, sich radial vom Gehäusemantel einwärts erstreckenden Stützfläche (7c) verspannbar ist, mit mindestens einem sich axial erstreckenden Vorsprung (15) in eine Ausnehmung (6) im Statorpaket (3) paßrecht eingreift und mit mehreren, in Umfangsrichtung des Gehäusemantels (1) verteilten, auf der Stützfläche (7b) aufsitzenden Spreizkrallen (14) versehen ist, die beim axialen Verspannen des Spreizelements (11) gegen den Gehäusemantel (1) gepreßt werden.

2. Rüttler nach Anspruch 1, **dadurch gekennzeichnet**, daß das Spreizelement (11) aus einem ebenen, flachen Stanzkörper (12) gefertigt ist, der ein kreisförmiges, mit Bohrungen für die Stromzuleitungen zum Motor versehenes Mittelstück (13) aufweist, von dem zur Bildung der Spreizkrallen vorgesehene kurze zungenartige Vorsprünge (14) und ein diesen gegenüber längerer Vorsprung (15) mit zueinander parallelen Seitenkanten (15a) radial vorragen, wobei zur Bildung des Spreizelements (11) die zungenartigen Vorsprünge (14) unter einem kleinen Winkel und der längere Vorsprung (15) mit den parallelen Seitenkanten (15a) unter einem rechten Winkel zur gleichen Seite hin aus der Ebene des Mittelstücks (13) um eine zu diesem tangentiale Knicklinie (14b bzw. 15b) herausgebogen werden.

3. Rüttler nach Anspruch 2, **dadurch gekenzeichnet**, daß beim Spreizelement (11) ein zentraler, mit einer Bohrung versehener, durch einen Einschnitt im Mittelstück (13) des Stanzkörpers (12) gebildeter Lappen um eine sich zwischen den Enden des Einschnitts erstreckende Knicklinie senkrecht zur anderen Seite des Mittelstücks (13) hin herausgebogen ist.

## Claims

1. Vibrator, in particular internal vibrator, for compacting concrete or the like, of which the unbalanced shaft is driven by an electromotor with an inner rotor (9) installed into the housing, which can be inserted from one front end of the housing cover (1) into the cylindrical inner chamber of the housing surrounded by this housing cover, and the cylindrical stator pack (3) of which electromotor can be inserted slidingly into the housing cover (1) and secured against rotation with respect to the housing cover (1), wherein the housing cover (1) can be closed on this front end by means of an upper housing part (2) which can be introduced axially into the housing cover (1) and is secured in the closed position against displacement in the axial direction of the housing cover (1), characterised in that in order to secure the stator pack (3) against rotation, a bracing element (11) of spring steel is provided which can be inserted through the open front end over the inserted stator pack (3), which bracing element can be clamped between the upper housing part (2) and an axially fixed support surface (7c) extending radially inwards from the housing cover, engages in a close-fitting manner with at least one axially extending projection (15) into a recess (6) in the stator pack (3) and is provided with a plurality of bracing claws (14) positioned on the support surface (7b) and distributed equally spaced in the circumferential direction of the housing cover (1), which claws during axial clamping of the bracing element (11) are pressed against the housing cover (1).

2. Vibrator according to claim 1, characterised in that the bracing element (11) is produced of a level, flat punched body (12) which comprises a circular middle piece (13) provided with bores for the power supply lines to the motor, from which middle piece short tongue-like projections (14) provided to form the bracing claws and a comparatively longer projection (15) with parallel lateral edges (15a) protrude radially, wherein in order to form the bracing element (11) the tongue-like projections (14) are bent at a shallow angle and the longer projection (15) with the parallel lateral edges (15a) is bent at a right angle to the same side out from the plane of the middle piece (13) along a bending line (14b or 15b) tangential to this middle piece.

3. Vibrator according to claim 2, characterised in that in the bracing element (11) a central tab, provided with a bore and formed by an incision in the middle piece (13) of the punched body (12), is bent perpendicularly outwards towards the other side of the middle piece (13) along a bending line extending between the ends of the incision.

## Revendications

1. Vibreur, en particulier vibreur interne, pour le compactage du béton ou similaire, dont l'arbre de balourd est entraîné par un moteur électrique, monté dans le carter, avec rotor interne (9), qui peut être introduit à partir d'une extrémité de l'enveloppe (1) du carter, dans le volume intérieur cylindrique, entouré par celle-ci, du carter et dont le paquet de stator (3) cylindrique peut être introduit avec ajustement glissant dans l'enveloppe (1) du carter et est bloqué contre une rotation par rapport à l'enveloppe (1) du carter, l'enveloppe (1) du carter pouvant être fermée à cette extrémité au moyen d'une partie supérieure de carter (2), qui peut être introduite axialement dans l'enveloppe (1) du carter et est bloquée en position de fermeture contre un déplacement dans la direction axiale de l'enveloppe (1) du carter, caractérisé en ce que pour bloquer le paquet de stator (3) contre une rotation il est prévu un élément d'écartement (11) en acier à ressort, à placer, par l'extrémité ouverte, sur le paquet de stator (3) introduit, élément d'écartement qui peut être serré entre la partie supérieure de carter (2) et une surface d'appui (7c) axialement fixe, s'étendant radialement vers l'intérieur à partir de l'enveloppe de carter, qui s'engage de manière ajustée, avec au moins une saillie (15) s'étendant axialement, dans un évidement (6) pratiqué dans le paquet de stator (3) et qui est pourvue de plusieurs griffes d'écartement (14) réparties dans la direction périphérique de l'enveloppe (1) du carter, placées sur la surface d'appui (7b), qui sont pressées contre l'enveloppe (1) du carter, lors du serrage axial de l'élément d'écartement (11).

2. Vibreur selon la revendication 1, caractérisé en ce que l'élément d'écartement (1) est réalisé dans un corps découpé (12) plan et plat, qui présente une pièce centrale (13) circulaire, pourvue de perçages pour les lignes électriques d'arrivée au moteur, duquel dépassent radialement de courtes saillies (14) en forme de languettes, prévues pour former les griffes d'écartement et une saillie (15) plus longue que celles-ci avec des bords latéraux (15a) parallèles entre eux, les saillies (14) en forme de languettes étant repliées, pour former l'élément d'écartement (11), sous un petit angle et la saillie (15) plus longue avec les bords latéraux (15a) parallèles étant repliée sous un angle droit vers le même côté, hors du plan de la pièce centrale (13), autour d'une ligne de pliage (14b respectivement 15b) tangentielle à celle-ci.

3. Vibreur selon la revendication 2, caractérisé en ce que dans l'élément d'écartement (11), une patte centrale, pourvue d'un perçage, formé par une entaille dans la pièce centrale (13) du corps découpé (12), est repliée autour d'une ligne de pliage, s'étendant entre les extrémités de l'entaille, perpendiculairement à l'autre côté de la pièce centrale (13).
